# EUROPEAN PATENT APPLICATION

(11) **EP 2 543 902 A1**
(43) Date of publication of application: **09.01.2013**
(21) Application number: 11750476.1
(22) Date of filing: 17.02.2011
(51) Int. Cl.: F16D 7/02

(54) **TORQUE LIMITER AND METHOD OF RECYCLING SAME**

(30) Priority: 17.06.2010 JP 2010138223; 04.03.2010 JP 2010047613
(71) Applicant: NTN Corporation, Osaka-shi, Osaka 550-0003 (JP)
(72) Inventor: YAMAMOTO Takashi, Kuwana-shi Mie 511-0811 (JP); TAKADA Seiichi, Kuwana-shi Mie 511-0811 (JP)
(74) Representative: Grünecker, Kinkeldey, Stockmair & Schwanhäusser
(86) International application number: PCT/JP2011/053382
(87) International publication number: WO 2011/108364

(57) **Abstract**

A lightweight spring type torque limiter is proposed, which performs the torque limiting function using the binding force applied from a coil spring to an inner ring inserted in an outer annular member. The inner ring (2) is rotatably inserted in the outer annular member (1). The coil spring (3) is fitted around the inner ring (2) and includes a small-diameter portion (3a) tightened against the radially outer surface of the inner ring (2). The coil spring (3) has hooks (3c and 3d) at the respective ends thereof which are coupled to the outer annular member (1) and an adjusting ring (4) rotatably fitted in the outer annular member (1), respectively. The inner ring (2) is formed by injection-molding a thermoplastic resin to reduce the weight of the inner ring and thus the weight of the entire torque limiter, compared to conventional inner rings, which are made of metal, and conventional torque limiters including an inner ring made of metal.

## Description

### TECHNICAL FIELD

The present invention relates to a small-sized torque limiter mounted e.g. in copiers and printers, and a method of recycling such a torque limiter.

Known small-sized torque limiters mounted e.g. in copiers and printers include spring type torque limiters such as the one disclosed in Patent document 1.

The torque limiter disclosed in Patent document 1 includes an outer annular member, an inner ring rotatably inserted in the outer annular member, a coil spring fitted around the inner ring and having a small-diameter portion tightened against the radially outer surface of the inner ring. The coil spring has hooks at the respective ends thereof which are coupled to the outer annular member and an adjusting ring rotatably fitted in the outer annular member, respectively.

When torque is applied to the inner ring which tends to radially expand the small-diameter portion of the coil spring, and the torque is not larger than a predetermined value, the inner ring is kept from rotating by the binding force from the coil spring. When this torque exceeds the predetermined value, the inner ring rotates with a constant torque due to reduced binding force from the coil spring. When torque is applied to the inner ring which tends to reduce the diameter of the small-diameter portion of the coil spring, this torque increases the binding force of the coil spring, causing the inner ring to become locked to the outer annular member.

The inner ring of this torque limiter is made of a porous sintered metal impregnated with lubricating oil. During operation of the torque limiter, lubricating oil in the inner ring bleeds and forms an oil film having a suitable thickness between the inner ring and the coil spring, thus stabilizing torque.

One problem with this torque limiter is its heavy weight because its inner ring is made of metal. It is difficult to transport such a heavy torque limiter, and also to mount such a heavy torque limiter in a machine. Robust packaging is necessary to transport such a heavy torque limiter.

To reuse or recycle such a torque limiter, it is necessary to dismount the inner ring, degrease, rinse and dry the inner ring, impregnate the inner ring with oil, and remount the inner ring. Recycling of such a torque limiter is therefore troublesome and time-consuming.

### PRIOR ART DOCUMENTS

### PATENT DOCUMENTS

Patent document 1: JP Patent Publication 11-108077A

### SUMMARY OF THE INVENTION

### OBJECT OF THE INVENTION

A first object of the present invention is to reduce the weight of a spring type torque limiter, which performs the torque limiting function using the binding force applied from a coil spring to an inner ring inserted in an outer annular member. A second object of the invention is to provide a less troublesome recycling method for recycling the torque limiter.

### MEANS TO ACHIEVE THE OBJECT

In order to achieve the first object, the present invention provides a torque limiter comprising an outer annular member, an inner ring rotatably mounted in the outer annular member, a coil spring fitted around the inner ring and including a small-diameter portion tightened against a radially outer surface of the inner ring and hooks formed at two respective ends of the coil spring, and an adjusting ring rotatably fitted in the outer annular member, the hooks of the coil spring being coupled to the outer annular member and the adjusting ring, respectively, characterized in that the inner ring is made of a synthetic resin.

By using a synthetic resin, instead of a conventional sintered metal, as a material for the inner ring, it is possible to reduce the weight of the inner ring, and thus the entire torque limiter.

The inner ring may be formed by injection-molding a thermoplastic resin. The thermoplastic resin may be polyacetal.

Preferably, an annular space defined between the outer annular member and the inner ring has both ends thereof closed, a lubricant is sealed in the annular space, and oil grooves are formed on the radially outer surface of the inner ring which extend in an axial direction of the inner ring in the annular space to retain the lubricant in the oil grooves. With this arrangement, it is possible to maintain sufficient lubrication between the inner ring and coil spring, thus stabilizing torque. If the adjusting ring is used as a lid closing one end of the annular space, the oil grooves are preferably configured to extend to a portion of the radially outer surface of the inner ring that faces a radially inner surface of the adjusting ring so as to prevent wear of the portion of the inner ring in sliding contact with the adjusting ring.

Preferably, the inner ring is formed with axially extending recesses in the form of grooves on its radially inner surface to further reduce the weight of the inner ring. A shaft is inserted in the inner ring and fitted on portions of the radially inner surface of the inner ring other than the recesses of the inner ring.

Preferably, any of the recesses of the inner ring is radially aligned with none of the oil grooves. If the recesses of the inner ring are arranged so as to be symmetrical to one another with respect to the center axis of the inner ring, the minimum wall thickness of the inner ring, i.e. the wall thickness of the portions of the inner ring where there are the recesses, is set to be 70% or over of the wall thickness of the portions of the inner ring where there are no recesses.

Preferably, at least one component part of the torque limiter is made of a synthetic resin having a specific color determined according to the characteristics of the torque limiter, said at least one component part being the inner ring, or comprising the inner ring and at least one other component part of the torque limiter. With this arrangement, it is possible to easily distinguish between torque limiters having different characteristics from each other, which in turn makes it easier to handle torque limiters for storage and transportation. Preferably, the inner ring is made of a synthetic resin having a color different from the color of the lubricant sealed in the annular space defined between the outer annular member and the inner ring.

The coil spring further comprises a large-diameter portion continuous with the small-diameter portion. This large-diameter portion is preferably tapered such that its diameter is the smallest at its boundary with the small-diameter portion and gradually increases toward its end remote from the small-diameter portion. The tapered shape of the large-diameter portion prevents the small-diameter portion of the coil spring from telescoping into the large-diameter portion, even when the adjusting ring is rotated relative to the outer annular member for torque adjustment, thus preventing separation of at least one of the hooks of the coil spring.

In order to achieve the second object, the present invention provides a method of recycling the above-described torque limiter after use of the torque limiter in which only the inner ring is replaced with a new one. Thus, in this recycling process, since the steps necessary for the recycling of the conventional inner ring made of a sintered oil-containing metal are all omitted, this process is extremely simple and far less troublesome.

### ADVANTAGES OF THE INVENTION

Since the inner ring is made of a synthetic resin, the torque limiter according to the present invention is far lighter in weight than conventional torque limiter including an inner ring made of a sintered metal. Such a lightweight torque limiter can be handled easily when e.g. mounted in a machine, and needs no strong packaging material. The inner ring of this invention can be formed more easily than an inner ring made of an oil-containing sintered resin, and also, the oil impregnation step is not necessary in manufacturing the inner ring of the present invention. Thus, the inner ring according to the present invention can be manufactured at a lower cost.

The recycling process of the torque limiter according to the present invention comprises the step of simply replacing only the inner ring with a new one, and thus extremely simple and far less troublesome. The recycling process according to the present invention thus consumes less resources and less energy, and the burden on the environment is smaller.

### BRIEF DESCRIPTION OF THE DRAWINGS

Fig. 1 is a vertical sectional front view of a torque limiter of a first embodiment.
Fig. 2 is a diametrical sectional view of an inner ring of Fig. 1.
Fig. 3 is a vertical sectional front view of a modification of the first embodiment in which different oil grooves are formed on the inner ring.
Fig. 4 is a vertical sectional front view of a torque limiter of a second embodiment.
Fig. 5 is a diametrical sectional view of an outer ring of Fig. 4.
Fig. 6 is a graph showing changes in torque from immediately after the start of operation of the respective torque limiters.

### BEST MODE FOR EMBODYING THE INVENTION

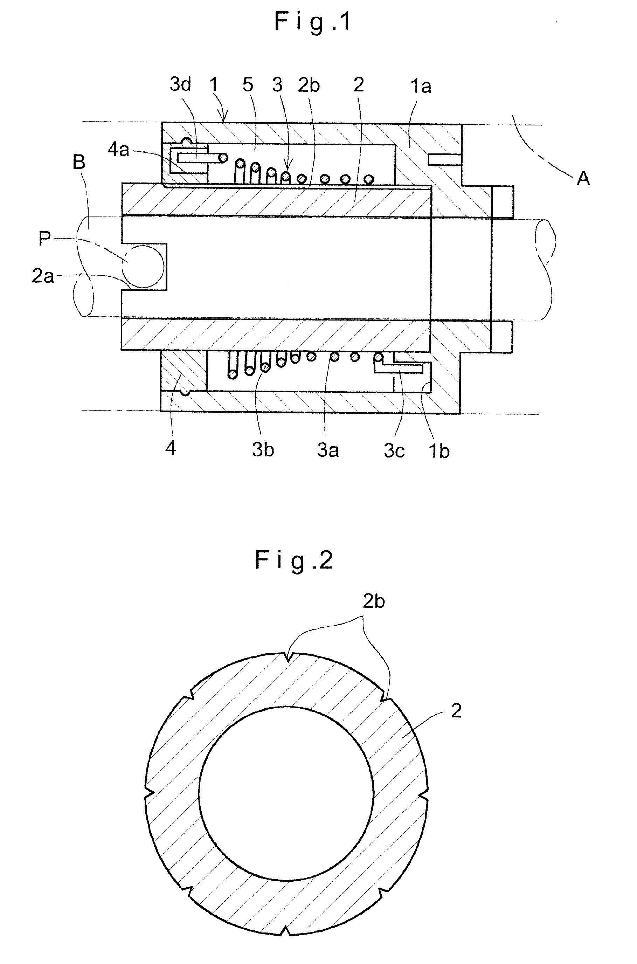

The embodiments of the present invention are now described with reference to the drawings. Figs. 1 and 2 show the torque limiter of the first embodiment, which is of a spring type including an outer annular member 1, an inner ring 2 rotatably inserted in the outer annular member 1, a coil spring 3 fitted around the radially outer surface of the inner ring 2, and an adjusting ring 4 rotatably fitted in the outer annular member 1. The outer annular member 1 is fixedly fitted in the inner peripheral surface of a tubular housing A. A rotary shaft B is inserted in the inner ring 2 which applies torque to the inner ring 2.

The outer annular member 1, inner ring 2 and adjusting ring 4 are all formed by injection-molding a thermoplastic resin. The thermoplastic resin forming the inner ring 2 is polyacetal. The resin forming the outer annular member 1 has a specific color determined according to the characteristics, such as the torque value, of the torque limiter so that torque limiters having different characteristics can be easily classified or otherwise managed for storage and transportation. For this purpose, the inner ring or the adjusting ring may be colored instead. If the inner ring is colored, the inner ring is preferably made of a resin having a different color from the later-described lubricant.

The outer annular member 1 includes a lid portion 1a at a first end thereof that closes a first end of an annular space 5 defined between the outer annular member 1 and the inner ring 2. The lid portion 1a is formed with a recess 1b in its axially inner surface. The coil spring 3 is engaged in the recess 1b and thus coupled to the outer annular member 1. The lid portion 1a has its radially inner surface in sliding contact with the rotary shaft B. The adjusting ring 4, which is fitted in the inner periphery of the outer annular portion 1 at its second end portion, is formed with a recess 4a in its axially inner surface. The coil spring 3 is engaged in the recess 4a and thus is coupled to the adjusting ring 4. The adjusting spring 4 has its radially inner surface in sliding contact with the inner ring 2, closing the second end of the annular space 5. The annular space 5, having the respective ends closed by the outer annular member 1a and the adjusting ring 4, is filled with grease (not shown) resistant to chemical attacks, as the above-mentioned lubricant. But the lubricant may be lubricating oil instead.

The coil spring 3 is formed by bending a spring steel material having a round or rectangular cross-section, and comprises a small-diameter portion 3a on its side including the first end which is tightened against the radially outer surface of the inner ring 2, and a large-diameter portion 3a on its side including the second end which is tapered such that its diameter is the smallest at the boundary with the small-diameter portion 3a and gradually increases toward the second end. The coil spring 3 has hooks 3c and 3d at the first and second ends thereof which are engaged in the recess 1b of the lid portion 1a of the outer annular member and the recess 4a of the adjusting ring 4, respectively. The coil spring 3 is thus coupled to the outer annular member 1 and the adjusting ring 4.

The inner ring 2 is a cylindrical member with no protrusions on the radially outer surface, and is formed with a cutout 2a at the second end thereof in which a pin P protruding from the radially outer surface of the rotary shaft B engages. When the rotary shaft B rotates, the pin P pushes one side of the cutout 2a, rotating the inner ring 2 together with the rotary shaft B.

A plurality of circumferentially spaced apart V-shaped oil grooves 2b are formed on the radially outer surface of the inner ring 2 to extend in the axial direction in the annular space 5, as a grease reservoir for retaining grease. In Fig. 1, the oil grooves 2b extend from the first end surface of the inner ring 2 (which is in sliding contact with the outer annular member 1a) to the portion of the radially outer surface of the inner ring that faces the radially inner surface of the adjusting ring 4 such that grease would not leak out through the grooves 2b and the grease in the grooves 2b reduces wear of the portions of the inner ring 2 and the adjusting ring 4 that are in sliding contact with each other.

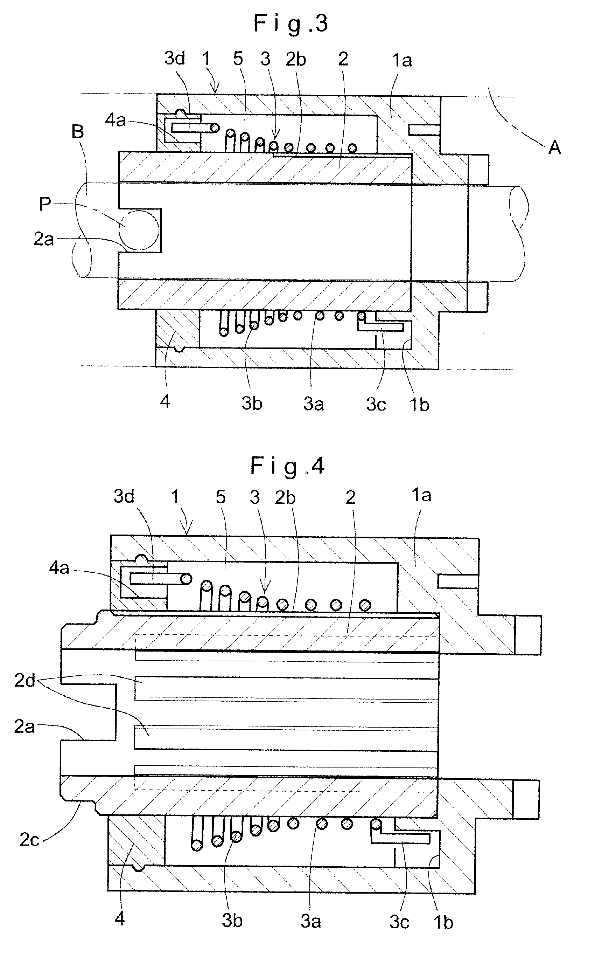

But instead, as shown in Fig. 3, the oil grooves 2b may extend from the first end surface of the inner ring 2 only up to the portion of the radially outer surface of the inner ring facing the small-diameter portion 3a of the coil spring 3. The oil grooves 2 may have a cross-section other than the shape of the letter V, such as a U-shaped cross-section.

The torque limiter of this invention operates in the same manner as the above-described conventional torque limiter. In particular, when torque is applied to the inner ring 2 from the rotary shaft B which tends to radially expand the small-diameter portion 3a of the coil spring 3, and the torque is not larger than a predetermined value, the inner ring 2 is kept from rotating by the binding force from the coil spring 3. When this torque exceeds the predetermined value, the inner ring 2 rotates with a constant torque due to reduced binding force from the coil spring 3. The torque applied from the inner ring 2 is adjustable by changing the angular position of the adjusting ring 4 relative to the outer annular member 1 before torque is applied from the inner ring 2, thereby changing the initial binding force of the coil spring 3. When torque is applied to the inner ring 2 which tends to reduce the diameter of the small-diameter portion 3a of the coil spring 3, this torque increases the binding force of the coil spring 3, causing the inner ring 2 to become locked to the outer annular member 1.

Since, besides its outer annular member 1 and adjusting ring 4, the outer ring 2 is also made of a synthetic resin, the torque limiter according to this invention is lighter in weight than conventional torque limiters of which the inner ring is made of a sintered metal, and thus easier to handle. The inner ring 2 is easily formable and thus can be manufactured at a low cost.

The oil grooves 2b formed on the radially outer surface of the outer ring 2 as a grease reservoir provide sufficient lubrication between the inner ring 2 and the coil spring 3, thus reducing wear of the inner ring 2, noise and torque reduction, all due to insufficient lubrication. The tapered shape of the large-diameter portion 3b of the coil spring prevents the small-diameter portion of the coil spring from telescoping into the large-diameter portion, thus preventing separation of at least one of the hooks of the coil spring.

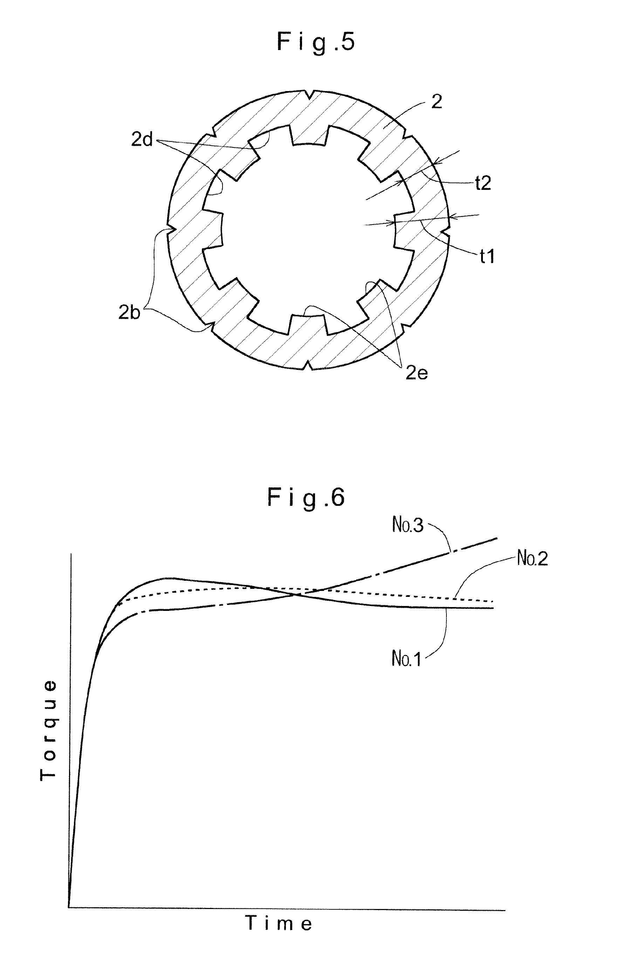

Figs. 4 and 5 show the second embodiment, in which the same oil grooves 2 shown in Fig. 1 are formed. Further, a recess 2c is formed on the radially outer surface of the inner ring 2 at its portion protruding from the adjusting ring 4. The portion of the inner ring 2 formed with the recess 2c has a smaller wall thickness than the other portion of inner ring 2.

A plurality of recesses 2d in the form of axially extending grooves are formed on the radially inner surface of the inner ring 2 so as to be radially aligned with none of the oil grooves 2b on the radially outer surface of the inner ring and so as to be symmetrical to one another with respect to the axis of the inner ring. The recesses 2d extend from the first end surface of the inner ring 2 to the portion of the radially inner surface of the inner ring that is in sliding contact with the adjusting ring 4. The rotary shaft B is fitted on the portions (fitting portions 2e) of the radially inner surface of the inner ring 2 other than the recesses 2d. Otherwise, this embodiment is structurally and operationally identical to the first embodiment.

In order to determine the optimum depth of the recesses 2d on the radially inner surface of the inner ring 2, three test inner rings (No. 1 to 3) were prepared each formed with recesses 2d having a different depth from the recesses 2d of the other test inner rings; torque limiters were assembled including the respective test inner rings; and changes in torque were traced during operation of the respective torque limiters. Table 1 shows the dimensional data of the respective test inner rings. (Dimensions t1 and t2 in Table 1 are shown in Fig. 5.) Fig. 6 shows the changes in torque during operation of the respective torque limiters.

**Table 1**

| Test inner ring | Inner diameter (mm) | Outer diameter (mm) | Wall thickness t1 (mm) | Depth of recesses (mm) | Minimum wall thickness t2 (mm) | t2/t1 (%) |
|---|---|---|---|---|---|---|
| N° 1 | 6 | 11 | 2.5 | 0.5 | 2.0 | 80 |
| N° 2 | 6 | 11 | 2.5 | 0.75 | 1.75 | 70 |
| N° 3 | 6 | 11 | 2.5 | 1.0 | 1.5 | 60 |

As is apparent from Fig. 6, for the torque limiters including the test inner rings No. 1 and 2, the torque value was stable from immediately after the start of operation. For the torque limiter including the test inner ring No. 3, the torque value increased gradually from the start of operation. This is presumably because in the test inner bearing No. 3, since the minimum wall thickness t2, i.e. the wall thickness of the inner ring where there are the recesses, is so thin as to reduce the rigidity of the inner ring and/or cause heat build-up, which in turn influenced the torque behavior.

Based on these experiment results, in the second embodiment, the minimum wall thickness t2, i.e. the wall thickness of the inner ring 2 where there are the recesses 2d is set to be 70% or over of the wall thickness t1, i.e. the wall thickness of the portion of the inner ring where there are not the recesses 2d. The recesses 2d serve to further reduce the weight of the inner ring 2 of the first embodiment, while maintaining stable torque by determining the minimum wall thickness t2 in the above manner.

Description is now made of how this torque limiter is recycled for reuse according to the present invention. First, the inner ring 2 is dismounted from the torque limiter after prolonged use. As mentioned earlier, since the radially outer surface of the inner ring is free of any protrusion, the inner ring can be easily dismounted and also a new inner ring can be easily remounted. The thus dismounted used inner ring 2 is crushed and repelletized and the pellets thus produced are used as raw material for various purposes.

After dismounting the inner ring, the torque limiter is disassembled into the individual component parts, i.e. the outer annular member 1, coil spring 3 and adjusting ring 4. The disassembled component parts are rinsed and dried. Alternatively, the torque limiter may be rinsed and dried as it is without disassembling. Markings are then placed on the respective component parts that indicate the number of times the respective component parts have been recycled. By checking the markings, both the manufacturer and the user can tell between brand-new and recycled parts, which in turn makes quality control easier.

As a final step, the thus recycled component parts and a brand-new inner ring 2 are reassembled into a torque limiter, grease is supplied into the torque limiter, and the adjusting ring 4 is turned to adjust torque. Even if the outer diameter of the inner ring is different between before and after recycling, if this difference is within the allowable range, it is possible to accurately achieve the predetermined torque by turning the adjusting ring 4 because by turning the adjusting ring 4, it is possible to absorb the difference in binding force from the coil spring 3 before and after recycling due to the above-mentioned difference in outer diameter of the inner ring before and after recycling.

By simply replacing the used inner ring with a brand-new inner ring in the above-mentioned manner, recycling can be done with fewer steps and thus more easily than the conventional recycling process, in which an inner ring made of a sintered oil-containing metal is reused. Since the inner ring 2 of the torque limiter according to the present invention is made of a synthetic resin, which is softer than the coil spring 3, which is made of metal, the inner ring 2 preferentially becomes worn and deteriorates. By simply replacing the thus worn and deteriorated inner ring with a new one, the recycled torque limiter maintains high performance comparable to a brand-new torque limiter.

### DESCRIPTION OF THE NUMERALS

1. Outer annular member
1a. Lid portion
1b. Recess
2. Inner ring
2a. Cutout
2b. Oil groove
2c, 2d. Recess
2e. Fitting portion
3. Coil spring
3a. Small-diameter portion
3b. Large-diameter portion
3c, 3d. Hook
4. Adjusting ring
4a. Recess
5. Annular space
A. Housing
B. Rotary shaft
P. Pin

## Claims

1. A torque limiter comprising an outer annular member, an inner ring rotatably mounted in the outer annular member, a coil spring fitted around the inner ring and including a small-diameter portion tightened against a radially outer surface of the inner ring and hooks formed at two respective ends of the coil spring, and an adjusting ring rotatably fitted in the outer annular member, the hooks of the coil spring being coupled to the outer annular member and the adjusting ring, respectively, **characterized in that** the inner ring is made of a synthetic resin.

2. The torque limiter of claim 1, wherein the inner ring is formed by injection-molding a thermoplastic resin.

3. The torque limiter of claim 2, wherein the thermoplastic resin is polyacetal.

4. The torque limiter of any of claims 1 to 3, wherein an annular space is defined between the outer annular member and the inner ring, the annular space having two ends thereof closed, wherein a lubricant is present in the annular space, and wherein oil grooves are formed on the radially outer surface of the inner ring which extend in an axial direction of the inner ring in the annular space to retain the lubricant in the oil grooves.

5. The torque limiter of claim 4, wherein the adjusting ring serves as a lid closing one of the two ends of the annular space, and wherein the oil grooves extend to a portion of the radially outer surface of the inner ring that faces a radially inner surface of the adjusting ring.

6. The torque limiter of any of claims 1 to 5, wherein the inner ring has a radially inner surface formed with axially extending recesses in the form of grooves.

7. The torque limiter of claim 6, further comprising a shaft inserted in the inner ring and fitted on portions of the radially inner surface of the inner ring other than the recesses of the inner ring.

8. The torque limiter of claim 6 or 7, wherein any of the recesses of the inner ring is radially aligned with none of the oil grooves.

9. The torque limiter of claim 8, wherein the recesses of the inner ring are symmetrical to one another with respect to a center axis of the inner ring, and wherein the inner ring has a minimum wall thickness at its portions where there are the recesses, and has a second wall thickness at its portions where there are not the recesses, the minimum wall thickness being 70% or over of the second wall thickness.

10. The torque limiter of any of claims 1 to 9, wherein at least one component part of the torque limiter is made of a synthetic resin having a specific color determined according to characteristics of the torque limiter, said at least one component part being the inner ring, or comprising the inner ring and at least one other component part of the torque limiter.

11. The torque limiter of claim 10, wherein the inner ring is made of a synthetic resin having a color different from the color of the lubricant sealed in the annular space defined between the outer annular member and the inner ring.

12. The torque limiter of any of claims 1 to 11, wherein the coil spring further comprises a large-diameter portion continuous with the small-diameter portion and tapered such that its diameter is the smallest at its boundary with the small-diameter portion and gradually increases toward its end remote from the small-diameter portion.

13. A method of recycling the torque limiter of any of claims 1 to 12 after use of the torque limiter, the method comprising replacing only the inner ring with a new inner ring.
